(19) **Europäisches Patentamt**
**European Patent Office**
**Office européen des brevets**

(11) **EP 1 635 578 B1**

(12) **EUROPÄISCHE PATENTSCHRIFT**

(45) Veröffentlichungstag und Bekanntmachung des Hinweises auf die Patenterteilung:
**19.11.2008 Patentblatt 2008/47**

(51) Int Cl.:
**H04N 7/32** (2006.01)

(21) Anmeldenummer: **05022899.8**

(22) Anmeldetag: **26.02.2004**

(54) **Verfahren und Anordnung zur Videocodierung, wobei die Videocodierung Texturanalyse und Textursynthese sowie Texturverzerrung umfasst, sowie ein entsprechendes Computerprogramm und ein entsprechendes computerlesbares Speichermedium**

Method and device for video coding, the video coding comprising texture analysis, texture synthesis and texture warping, a corresponding computer program and a corresponding computer-readable storage medium

Procédé et agencement destinés au codage vidéo, par lesquels le codage vidéo comporte l'analyse de la texture et la synthèse de la texture ainsi qu'une déformation de la texture, ainsi qu'un programme informatique correspondant et un support de stockage lisible sur ordinateur correspondant

(84) Benannte Vertragsstaaten:
**AT BE BG CH CY CZ DE DK EE ES FI FR GB GR HU IE IT LI LU MC NL PT RO SE SI SK TR**

(30) Priorität: **28.02.2003 DE 10310023**

(43) Veröffentlichungstag der Anmeldung:
**15.03.2006 Patentblatt 2006/11**

(62) Dokumentnummer(n) der früheren Anmeldung(en) nach Art. 76 EPÜ:
**04714778.0 / 1 599 835**

(73) Patentinhaber: **Fraunhofer-Gesellschaft zur Förderung der angewandten Forschung e.V. 80686 München (DE)**

(72) Erfinder:
• **Makai, Bela**
  **13403 Berlin (DE)**
• **Ndjiki-Nya, Patrick**
  **13505 Berlin (DE)**
• **Schwarz, Heiko**
  **13187 Berlin (DE)**
• **Smolic, Aljoscha**
  **10963 Berlin (DE)**
• **Wiegand, Thomas, Dr.**
  **10719 Berlin (DE)**

(74) Vertreter: **Schenk, Markus et al Patentanwälte Schoppe, Zimmermann Stöckeler & Zinkler Postfach 246 82043 Pullach (DE)**

(56) Entgegenhaltungen:
**US-A- 5 533 140**

• **NDJIKI-NYA P ET AL: "Improved H.264/AVC coding using texture analysis and synthesis" 2003, PISCATAWAY, NJ, USA, IEEE, USA, 14. September 2003 (2003-09-14), Seiten III-849, XP002286886 ISBN: 0-7803-7750-8**
• **YOON S Y ET AL: "Subband texture synthesis for image coding" PROC. SPIE - INT. SOC. OPT. ENG. (USA), PROCEEDINGS OF THE SPIE - THE INTERNATIONAL SOCIETY FOR OPTICAL ENGINEERING, 1998, SPIE-INT. SOC. OPT. ENG, USA, Bd. 3299, Januar 1998 (1998-01), Seiten 489-497, XP002286887 ISSN: 0277-786X**
• **MALKI J ET AL: "Region queries without segmentation for image retrieval by content" 1999, BERLIN, GERMANY, SPRINGER-VERLAG, GERMANY, 2. Juni 1999 (1999-06-02), Seiten 115-122, XP002286888 ISBN: 3-540-66079-8**

**EP 1 635 578 B1**

**Beschreibung**

Die Erfindung betrifft ein Verfahren und eine Anordnung zur Videocodierung, wobei die Videocodierung Texturanalyse und Textursynthese umfasst, sowie ein entsprechendes Computerprogramm und ein entsprechendes computerlesbares speichermedium. Die Erfindung ist insbesondere einsetzbar zur Reduktion der Datenrate bei der Übertragung von Videodaten.

Viele Videoszenen enthalten typische Texturen wie Wasser, Gras, Bäume, Wolken, Sand usw. Diese Texturen sind in der Regel detailreich und deshalb sehr aufwendig zu codieren. Die exakte Rekonstruktion dieser Texturen kann allerdings als unwichtig erachtet werden, wenn sie mit einer geringen örtlichen Auflösung dargestellt sind. Es ist deshalb unnötig, zuerst eine rechenaufwendige Codierung solcher Texturbereiche durchzuführen, die dabei entstehende (große) Datenmenge zu übertragen, um schließlich die Textur MSE-basiert (MSE = Mean Squared Error) zu rekonstruieren. Der Betrachter muss lediglich die dargestellte detail-irrelevante Textur erkennen können, was selbst bei der so durchgeführten Rekonstruktion oft nicht der Fall ist, wenn ein Vorfilter eingesetzt wird, da hierdurch die Textur verfälscht wird.

Ein Verfahren zur Kodierung von Bildern, welches Texturanalyse und Textursynthese umfasst, ist beispielsweise aus dem Artikel Yoon S Y et al: "Subband texture synthesis for image coding", Proceedings of the SPIE, Vol. 3299, Januar 1998, pp. 489-497, bekannt. Das Verfahren ist auf unbewegte Bilder ausgelegt. Bei bewegten Bildern besteht allerdings zusätzlich, wegen der meist hohen Ähnlichkeit direkt aufeinanderfolgender Bilder, eine weitere Möglichkeit zur Informationsreduzierung.

Smolic et al: "Long-term global motion estimation and its application for sprite coding, content description, and segmentation", IEEE Transactions on Circuits and Systems for Video Technology, Vol. 9(8), December 1999, beschreibt sogenanntes "sprite coding" für Videodaten. Hierbei wird parallel zur Videosequenz ein über längere Zeitabschnitte konstantes "background sprite" übertragen, aus welchem der Dekodierer mittels geeigneter Verzerrungen (Warping) plus eines Differenzbildes das aktuelle Videobild errechnet.

Die Aufgabe der Erfindung besteht deshalb darin, ein Verfahren und eine Anordnung zur Videocodierung, wobei die Videocodierung Texturanalyse und Textursynthese umfasst, sowie ein entsprechendes Computerprogramm und ein entsprechendes computerlesbares Speichermedium bereitzustellen, welche die genannten Nachteile der bekannten Lösungen vermeiden und insbesondere eine Wiedergabe von Texturen ohne visuellen Qualitätsverlust bei gleichzeitiger Reduktion der zu übertragenden Videodaten ermöglichen.

Diese Aufgabe wird erfindungsgemäß durch die Merkmale in den Ansprüchen 1, 15, 16, 17, 18 sowie 19 gelöst. Zweckmäßige Ausgestaltungen der Erfindung sind in den Unteransprüchen enthalten.

Ein besonderer Vorteil des Verfahrens zur Videocodierung, wobei die Videocodierung Texturanalyse und Textursynthese umfasst, besteht darin, daß die Datenrate der zu übertragenden Videodaten reduziert wird, indem encoderseitig eine Texturanalyse von Videoszenen erfolgt zur Ermittlung von Bereichen synthetisierbarer Textur, unter Verwendung von Informationen über ermittelte Bereiche synthetisierbarer Textur und von Informationen über die Textur dieser Bereiche eine Kodierung der Videoszenen durchgeführt und Meta-Daten zur Beschreibung der ermittelten Bereiche und zur Beschreibung der synthetisierbaren Textur erzeugt und decoderseitig kodierte Daten und Meta-Daten ausgewertet und die Videoszenen rekonstruiert werden, indem durch Auswertung der Meta-Daten für ermittelte Bereiche Texturen synthetisch generiert werden.

In einer bevorzugten Ausführungsform des erfindungsgemäßen Verfahrens ist vorgesehen, daß Bereiche synthetisierbarer Textur durch eine Split-and-Merge-Segmentierung ermittelt werden, wobei Bilder unter Verwendung eines Multiresolutionquadtrees in Teilbilder (Blöcke) aufgeteilt werden. Es hat sich dabei als vorteilhaft erwiesen, daß die Aufteilung eines Blockes (Ausgangsblock) abgebrochen wird, wenn die durch den nächsten Aufteilungsschritt entstehenden Sub-blöcke ähnliche Farb- und/oder Textureigenschaften wie der Ausgangsblock aufweisen oder die Größe von Blöcken des letzten Aufteilungsschrittes einen vorgegebenen Wert unterschreitet. Es ist darüber hinaus vorteilhaft, daß Blöcke, deren Aufteilung aufgrund ähnlicher Farb- und/oder Textureigenschaften abgebrochen wurde, als homogene Blöcke und die nach erfolgter Aufteilung des Bildes von den homogenen Blöcken verschiedenen Blöcke als unklassifizierbare Blöcke gekennzeichnet werden. Zur Reduzierung der Anzahl der Blöcke, ist in einer Ausführungsform vorgesehen, daß nach der Aufteilung eines Bildes für die homogenen Blöcke eine Ähnlichkeitsbewertung erfolgt und ähnliche Blöcke zu synthetisierbaren Bereichen zusammengefasst werden. Eine spezielle Ausführungsform des erfindungsgemäßen Verfahrens sieht dabei vor, daß die Ähnlichkeit von Blöcken auf Basis der MPEG-7-Deskriptoren "Edge Histogram"-Textur-Deskriptor (EH) und/oder "SCalable Color"-Deskriptor (SCC) bewertet wird.

Eine andere bevorzugte Ausführungsform sieht vor, dass ermittelte Bereiche synthetisierbarer Textur eines Bildes mit Bereichen synthetisierbarer Textur vorangegangener Bilder der Videosequenz abgeglichen werden.

Es ist weiter von Vorteil, wenn das erste und letzte Bild (die sog. Keyframes) einer "Group of Frames" (GoF) auf Basis eines Mean Squared Error-Verfahrens (MSE-basiert) codiert und dazwischenliegende B-Bilder mit ermittelten synthetisierbaren Bereichen partiell synthetisiert werden. In einer weiteren bevorzugten Ausführungsform des erfindungsgemäßen Verfahrens ist vorgesehen, dass die zeitliche Konsistenz der Erkennung synthetisierbarer Texturen einer "Group of Frames" (GoF) mittels eines Texturkatalogs sichergestellt wird.

Eine andere bevorzugte Ausführungsform sieht vor, dass synthetisierbare Bereiche in den partiell synthetisierten Bildern an entsprechende Texturbereiche in den Keyframes durch geeignete Verzerrungen (Warping) angepasst werden. Es ist dabei insbesondere vorgesehen, daß das Warping mit Hilfe eines durch folgende Gleichungen beschriebenen planaren perspektivischen Bewegungsmodells durchgeführt wird

$$x´ = [(a_1 + · a_3x + a_4y)/(1 + a_7x + a_8y)] + x,$$

$$y´ = [(a_2 + a_5x + a_6y)/(1 + a_7x + a_8y)] + y,$$

wobei

(x,y)      die Koordinaten des Ausgangspunktes,
(x',y')    die transformierten Koordinaten des Ausgangs-punktes und
$a_1, ..., a_8$    Modellparameter

darstellen.

Besonders gute Ergebnisse der Textursynthese werden erreicht, wenn durch das Warping die Textur. des ersten oder letzten Bildes des aktuellen GoF in Richtung des ermittelten synthetisierbaren Texturbereiches verzerrt wird, wobei jedem solchen Texturbereich ein Bewegungsparametersatz und ein Kontrollparameter zugeordnet wird, wobei der Kontrollparameter angibt, ob das erste oder das letzte Bild eines GoF für die Textursynthese verwendet wird. Hierfür ist speziell vorgesehen, daß für die Textursynthese das Bild eines GoF verwendet wird, für welches ein kleineres Differenzsignal zwischen der synthetisierten und der Originaltexturregion ermittelt wird.

In einer weiteren bevorzugten Ausführungsform des erfindungsgemäßen Verfahrens zur Videocodierung ist vorgesehen, daß als Meta-Daten von Bereichen mit synthetisierbarer Textur pro Texturbereich eine Segmentierungsmaske, ein Bewegungsparametersatz und/oder ein Kontrollparameter übertragen werden.

Darüber hinaus erweist es sich als vorteilhaft, wenn beim Decodieren alle zu einer synthetisierbaren Textur gehörende Makroblöcke als "Skipped"-Makroblöcke behandelt werden.

Eine Anordnung nach der Erfindung weist mindestens einen Chip und/oder Prozessor auf, der (die) derart eingerichtet ist (sind), dass ein Verfahren zur Videocodierung, wobei die Videocodierung Texturanalyse und Textursynthese umfasst, ausführbar ist, wobei ein Element angeordnet ist zur Ausführung eines Verfahrens zur Videocodierung mit foldenden Schritten:

- encoderseitig Durchführung einer Texturanalyse von Videoszenen zur Ermittlung von Bereichen synthetisierbarer Textur, unter Verwendung von Informationen über ermittelte Bereiche synthetisierbarer Textur und von Informationen über die Textur dieser Bereiche Kodierung der Videoszenen und Erzeugung von Meta-Daten zur Beschreibung der ermittelte Bereiche und zur Beschreibung der synthetisierbaren Textur und

- decoderseitig Auswertung von kodierten Daten und Meta-Daten und Rekonstruktion der Videoszenen, indem durch Auswertung der Meta-Daten für ermittelte Bereiche Texturen synthetisch generiert werden.

In einer bevorzugten Ausführungsform der erfindungsgemäßen Anordnung ist vorgesehen, dass die Anordnung einen Video-Encoder, einen Textur-Analyzer (TA), einen Video-Decoder und einen Textur-Synthesizer (TS) umfasst, wobei Video-Encoder und Textur-Analyzer (TA) jeweils einen Video-In-Eingang und der Video-Decoder einen Video-Out-Ausgang aufweisen, der Ausgang des Textur-Analyzers (TA) mit einem zweiten Eingang des Video-Encoders und der Ausgang des Video-Encoders mit dem Eingang des Video-Decoders verbunden sind, und zusätzlich ein zweiter Ausgang des Video-Encoders mit dem Eingang des Textur-Synthesizer (TS) verbunden ist.

Es erweist sich als vorteilhaft, zur Ausführung der erfindungsgemäßen Videocodierung ein Computerprogramm einzusetzen, das es einem Computer ermöglicht, nachdem es in den Speicher des Computers geladen worden ist, ein Verfahren zur Videocodierung, wobei die Videocodierung Texturanalyse und Textursynthese umfasst, auszuführen, wobei das Computerprogramm Programmcode umfasst zur Ausführung eines Verfahrens zur Videocodierung mit foldenden Schritten:

- encoderseitig Durchführung einer Texturanalyse von Videoszenen zur Ermittlung von Bereichen synthetisierbarer Textur, unter Verwendung von Informationen über ermittelte Bereiche synthetisierbarer Textur und von Informationen über die Textur dieser Bereiche Kodierung der Videoszenen und Erzeugung von Meta-Daten zur Beschreibung der ermittelte Bereiche und zur Beschreibung der synthetisierbaren Textur und

- decoderseitig Auswertung von kodierten Daten und Meta-Daten und Rekonstruktion der Videoszenen, indem durch Auswertung der Meta-Daten für ermittelte Bereiche Texturen synthetisch generiert werden.

Alternativ dazu kann es sich als vorteilhaft erweisen, wenn ein computerlesbares Speichermedium genutzt wird, auf dem ein Programm gespeichert ist, das es einem Computer ermöglicht, nachdem es in den Speicher des Computers geladen worden ist, ein Verfahren zur Videocodierung, wobei die Videocodierung Texturanalyse und Textursynthese umfasst, auszuführen, wobei das Computerprogramm Programmcode umfasst zur Ausführung eines Verfahrens zur Videocodierung mit foldenden Schritten:

- encoderseitig Durchführung einer Texturanalyse von Videoszenen zur Ermittlung von Bereichen synthetisierbarer Textur, unter Verwendung von Informationen über ermittelte Bereiche synthetisierbarer Textur und von Informationen über die Textur dieser Bereiche Kodierung der Videoszenen und Erzeugung von Meta-Daten zur Beschreibung der ermittelte Bereiche und zur Beschreibung der synthetisierbaren Textur und
- decoderseitig Auswertung von kodierten Daten und Meta-Daten und Rekonstruktion der Videoszenen, indem durch Auswertung der Meta-Daten für ermittelte Bereiche Texturen synthetisch generiert werden.

Die Erfindung wird nachfolgend unter Bezugnahme auf die Figuren der Zeichnungen an einem Ausführungsbeispiel näher erläutert. Es zeigen:

Figur 1    Videocodierung unter Verwendung eines Textur-Analyzers (TA) und eines Textur-Synthesizers (TS);

Figur 2    Segmentiertes Einzelbild nach der "Split"-Stufe (links) und nach der "Merge"-Stufe (rechts);

Figur 3    Warping eines Texturbereichs des Referenzbildes in Richtung des aufzufüllenden Bildbereichs im aktuellen Frame;

Figur 4    Codierergebnisse für die Testsequenz "Flower-garden";

a) Oben links: Originalbild (Bild Nr. 6 der "Flowergarden"-Sequenz);
b) Unten links: Decodiertes Bild mit synthetisierten Texturregionen;
c) Oben rechts: Differenzsignal (Verstärkungs-faktor 3);
d) Unten rechts: Konservative bewegungskompensierte Maske;

Figur 5    Einsparung der Datenrate (bitrate savings) in Abhängigkeit vom Quantisierungsparameter QP.

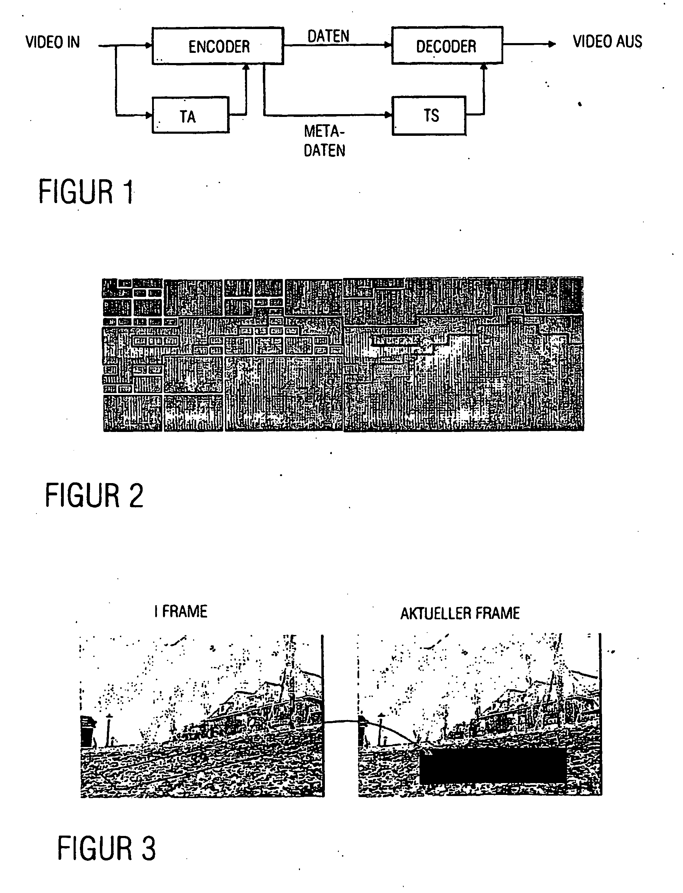

Bei dem im folgenden beschriebenen Ausführungsbeispiel wird der Ansatz verfolgt, eine verbesserte Wiedergabe von Texturen zu realisieren, indem durch den Einsatz des erfindungsgemäßen Verfahrens zur Vodeocodierung eine senderseitige Texturanalyse und eine decoderseitige Textursynthese durchgeführt werden (vgl. Figur 1).

Der Textur-Analyzer identifiziert detail-irrelevante Texturregionen, erzeugt entsprechende grobe Masken und signalisiert diese dem Decoder als Seiteninformation für den Textur-Synthesizer. Letzterer ersetzt die identifizierten Texturen, unter Ausnutzung der Seiteninformation, durch synthetisch erzeugte Texturen.

Diese Vorgehensweise basiert auf der Erkenntnis, dass für die identifizierten detail-irrelevanten Texturen, gängige objektive Gütekriterien wie beispielsweise der mittlere quadratische Fehler (Mean Squared Error - MSE) für eine effiziente Codierung nicht geeignet sind, da u.U. irrelevante Details übertragen und rekonstruiert werden. Unsere Untersuchungen zeigen, dass ein MPEG-7-Ähnlichkeitsmaß oft ausreicht, die Güte rekonstruierter, detail-irrelevanter Texturen zu erfassen (vgl. ISO/IEC JTC1/SC29/WG11/N4358: "Text of ISO/IEC 15938-3/FDIS Informationstechnology - Multimedia content description interface - Part 3 Visual", Sydney, Australia, July 2001; ISO/IEC JTC1/SC29/WG11/N4362: "MPEG-7 Visual part of eXperimentation Model Version 11.0", Sydney, Australia, July 2001.). Das Verwenden von MPEG-7-Ähnlichkeitskriterien hat zur Folge, dass die rekonstruierten Texturen unterschiedliche Details im Vergleich zur Originaltextur aufweisen können. Diese Unterschiede sind kaum währnehmbar, wenn die örtliche Auflösung der Texturen nach der Rekonstruktion erhalten bleibt, und sind weit weniger störend als die entsprechenden Artefakte bei der Codierung des Differenzsignals mit einer der Seiteninformation entsprechenden Bitrate.

Im folgenden sollen die verwendeten Algorithmen zur senderseitigen Texturanalyse und zur empfängerseitigen Textursynthese, sowie die Systemintegration in einen H.264/AVC-Codec beschrieben werden.

**Encoderseitige Texturanalyse**

Bei der Texturanalyse wird für jedes Bild einer Sequenz eine "Split and Merge" Segmentierung durchgeführt.

Dabei wird im ersten Schritt (Aufteilungs- bzw. "Split"-Stufe) jedes Bild unter Verwendung eines Multiresolutionsquadtrees in Blöcke aufgeteilt und analysiert (vgl. J. Malki et al.: "Region Queries without Segmentation for Image Retrieval by Content", VISUAL' 99, pp. 115-122, 1999.). Das Multiresolutionsquadtree umfasst mehrere Ebenen, wobei die erste (Level 0) dem Originalbild entspricht. Die Anzahl der Blöcke auf der L-ten Ebene beträgt $2^{2L}$. Jeder Block auf der Ebene (L-1) wird auf der nächsthöheren Ebene (Level L) in 4 Blöcke aufgeteilt, so dass die Anzahl der Blöcke eines Bildes horizontal und vertikal immer gleich bleibt (z.B. 4 Blöcke horizontal und vertikal auf der zweiten Ebene (L=2)).

Ein Block auf der Ebene (L-1) enthält eine homogene Textur, wenn seine vier Sub-Blöcke auf der L-ten Ebene ähnliche Farb- bzw. Textureigenschaften aufweisen, wie der Block selbst. Hierbei wird die Ähnlichkeit durch entsprechende MPEG-7-Deskriptoren ermittelt, wie weiter unten erläutert werden wird. Nur die inhomogenen Blöcke werden in der nächsthöheren Ebene weiter unterteilt. Blöcke, die selbst nach Erreichen der maximalen Unterteilungsebene noch inhomogen sind, werden als unklassifizierbar eingestuft. Das Ergebnis der "Split"-Stufe ist typischerweise ein übersegmentiertes Bild, das in der Zusammenfassung- bzw. "Merge"-Stufe nachbearbeitet werden muss, indem ein Teil der Blöcke eines übersegmentierten Bildes zusammengefasst wird.

Dazu werden in der "Merge"-Stufe homogene Blöcke paarweise verglichen und bei ausreichender Ähnlichkeit zu einem Cluster zusammengefasst. Figur 2 zeigt ein Beispiel eines segmentierten Einzelbildes nach der "Split"-Stufe und nach der "Merge"-Stufe. Regionen, die als unklassifizierbar gelten, sind durch einen schwarzen Rand gekennzeichnet, während die klassifizierten Regionen durch nichtschwarze Ränder markiert sind.

Es ist deutlich erkennbar, dass sich die Anzahl der homogenen Regionen durch die nachgeschaltete "Merge"-Stufe deutlich reduziert hat.

Die Ähnlichkeitsbewertung zwischen zwei Blöcken erfolgt auf der Basis von zwei MPEG-7 Deskriptoren (vgl. ISO/IEC JTC1/SC29/WG11/N4358: "Text of ISO/IEC 15938-3/FDIS Informationstechnology - Multimedia content description interface - Part 3 Visual", Sydney, Australia, July 2001; ISO/IEC JTC1/SC29/WG11/N4362: "MPEG-7 Visual part of eXperimentation Model Version 11.0", Sydney, Australia, July 2001.). Es handelt sich dabei zum Einen um den "Edge Histogram"-Textur-Deskriptor (EH), der die räumliche Verteilung von vier gerichteten Kanten (eine horizontale, eine vertikale und zwei diagonale) und einer ungerichteten Kante für 16 lokale, nicht überlappende Regionen eines Bildes darstellt. Die Häufigkeit des Auftretens der einzelnen Kantenklassen wird für jede lokale Region getrennt ermittelt. Der EH-Merkmalsvektor hat damit die Dimension 80 (16 Regionen mal fünf Kantenklassen). Der zweite verwendete MPEG-7-Deskriptor ist der "SCalable Color"-Deskriptor (SCC). Er stellt ein Farbhistogramm im HSV-Farbraum dar, wobei HSV einen dreidimensionalen Farbraum mit den Komponenten Hue (Färbung), Saturation (Sättigung) und Value (Helligkeit) repräsentiert. Der verwendete SCC-Merkmalsvektor hat die Dimension 256.

Zwei Blöcke werden als ähnlich eingestuft, wenn der Abstand zwischen den entsprechenden Merkmalsvektoren unter einem vorgegebenen Schwellwert liegt. Der Schwellwert wird dabei auf den maximal möglichen Abstand bezogen. Letzterer hängt von der gewählten Metrik ($I_1$, $I_2$, EMD) und dem aktuellen MPEG-7 Deskriptor (SCC oder EH) ab. Der Schwellwert Null weist darauf hin, dass zwei Blöcke nur bei hundertprozentiger Übereinstimmung ihrer Merkmalsvektoren als ähnlich eingestuft werden können, während der Schwellwert 1 bedeutet, dass zwei beliebige Blöcke immer ähnlich sind, da der Abstand zwischen ihren Merkmalsvektoren nicht größer sein kann als der größtmögliche Abstand. Der Ähnlichkeitsschwellwert wird für jede Sequenz manuell gesetzt und bleibt konstant über die ganze Sequenz.

Die "Split and Merge"-Segmentierung behandelt jedes Bild unabhängig von den anderen Bildern einer Sequenz. Es entstehen dabei unvermeidbare zeitliche Inkonsistenzen bzgl. der bildübergreifenden Texturerkennung. Daher werden die identifizierten Texturbereiche eines aktuellen Bildes mit den Texturbereichen der vorangegangenen Bilder abgeglichen. Für die angestrebte Anwendung ist wichtig, dass die zeitliche Konsistenz der Erkennung identifizierter Texturen für jedes "Group of Frames" (GoF) der betrachteten Sequenz gegeben ist. Ein GoF besteht dabei aus zwei Keyframes (das erste und das letzte Bild eines GoF) und mehreren dazwischenliegenden partiell synthetisierten Frames. Keyframes sind entweder I- oder P-Bilder, die ausschließlich MSE-basiert codiert werden.

Die zeitliche Konsistenz der Erkennung identifizierter detail-irrelevanten Texturen eines GoF wird mittels eines Texturkatalogs sichergestellt. In diesem Texturkatalog werden die in der betrachteten Sequenz vorhandenen detail-irrelevanten Texturen gespeichert. Der Texturkatalog wird mit den Merkmalsvektoren der detail-irrelevanten Texturen initialisiert, die im ersten Bild mit detail-irrelevanten Texturen auftreten. Die identifizierten Texturen der folgenden Bilder werden mit den Eintragungen im Texturkatalog verglichen und bei vorhandener Übereinstimmung dem entsprechenden Eintrag zugewiesen. Bei mangelnder Übereinstimmung werden die betroffenen, unregistrierten, detail-irrelevanten Texturen in den Texturkatalog eingetragen.

Die Zuverlässigkeit der farb- bzw. texturbasierten Identifikation synthetisierbarer Texturbereiche eines GoF lässt sich steigern, wenn die detail-irrelevanten Texturbereiche in den partiell synthetisierten Bildern an die entsprechenden Texturbereiche in den Keyframes durch geeignete Verzerrungen (Warping) angepasst werden. Die detail-irrelevanten Texturbereiche eines Bildes werden daher in Richtung der korrespondierenden Keyframes (erstes und letztes Bild im GoF) verzerrt. Das Warping wird mit Hilfe des planaren perspektivischen Bewegungsmodells, wie vom MPEG-7 Parametric Motion Deskriptor (vgl. ISO/IEC JTC1/SC29/WG11/N4358: "Text of ISO/IEC 15938-3/FDIS Informationstechnology - Multimedia content description interface - Part 3 Visual", Sydney, Australia, July 2001; ISO/IEC JTC1/SC29/WG11/N4362: "MPEG-7 Visual part of experimentation Model Version 11.0", Sydney, Austrlia, July 2001.) definiert, durchgeführt. Das perspektivische Bewegungsmodell wird durch folgende Gleichungen beschrieben:

$$x' = [(a_1 + a_3x + a_4y)/(1 + a_7x + a_8y)] + x$$

$$y' = [(a_2 + a_5x + a_6y)/(1 + a_7x + a_8y)] + y$$

Die Koordinaten (x',y') stellen die transformierten Koordinaten des Ausgangspunktes (x,y) dar. Die acht Modellparameter werden durch $a_1,...,a_8$ beschrieben. Das planare perspektivische Modell kann beliebige Bewegungen beliebiger starrer Körper beschreiben, falls sich die Kameraoperationen auf reine Rotation und Zoom beschränken. Bei planaren starren Körpern sind beliebige Kameraoperationen zulässig. In der Praxis sind diese Bedingungen für die kurze Zeitspanne eines GoF in der Regel erfüllt. Die Bewegungsparameter $(a_1,...,a_8)$ der identifizierten detail-irrelevanten Texturbereiche in Bezug auf korrespondierende Texturbereiche der entsprechenden Keyframes werden, wie in (vgl. A. Smolic and J.-R. Ohm: "Robust Global Motion Estimation Using a Simplified M-Estimator Approach", Proc. ICIP2000, IEEE International Conference on Image Processing, Vancouver, Canada, September 2000.) dargestellt, geschätzt. Das Warping kann nur durchgeführt werden, wenn entsprechende Texturbereiche im ersten oder im letzten Bild des GoF vorhanden sind bzw. identifiziert wurden. Nur diejenigen Punkte des transformierten Texturbereichs, die innerhalb des korrespondierenden Texturbereichs des ersten Bildes des GoF liegen, können für die Synthese verwendet werden. Die übrigen Punkte werden im aktuellen Bild als unklassifizierbar markiert, wodurch sich der synthetisierbare Texturbereich verkleinert. Dieses Verfahren wird mit dem letzten Bild des GoF wiederholt. Der Textur-Analyzer liefert somit zwei reduzierte bewegungskompensierte Texturbereiche für jede ursprünglich identifizierte Texturregion (nach der "Merge"-Stufe) eines partiell synthetisierbaren Bildes.

## Decoderseitige Textursynthese

Der verwendete Textur-Synthesizer verzerrt ("Warping") die Textur des ersten oder letzten Bildes des aktuellen GoF in Richtung der entsprechenden, vom Textur-Analyzer identifizierten, synthetisierbaren, Texturregion (Figur 3). Dazu wird für jede, vom Textur-Analyzer identifizierte, synthetisierbare Texturregion ein Bewegungsparametersatz und ein Kontrollparameter benötigt. Der Kontrollparameter bestimmt, ob das erste oder das letzte Bild eines GoF für die Textursynthese verwendet wird. Es wird dabei immer das Referenzbild verwendet, das zur besten Textursynthese führt. Dabei zeichnet sich die bessere Textursynthese durch eine kleineres Differenzsignal zwischen der synthetisierten und der Originaltexturregion aus. Dieser Textur-Synthesizer liefert sehr gute Ergebnisse für starre Körper, sofern die Annahmen des Bewegungsmodells erfüllt sind.

In einer beispielhaften Ausführungsform wurden die beschriebenen Verfahren zur Analyse und Synthese von Texturen in einen H.264/AVC-Codec (Joint Model 2.1) integriert. Dabei werden I- und P-Bilder MSE-basiert codiert und als Keyframes verwendet. B-Bilder können hingegen partiell synthetisiert werden. Für B-Bilder mit identifizierten, synthetisierbaren Texturbereichen sind pro Texturregion eine Segmentierungsmaske, ein Bewegungsparametersatz sowie ein Kontrollparameter als Seiteninformationen zu übertragen.

Beim Decodieren werden alle zu einer synthetisierbaren Textur gehörende Makroblöcke als "Skipped"-Makroblöcke behandelt, d. h. alle zur Decodierung nachfolgender Makroblöcke innerhalb des Slice benötigte Parameter und Variablen (in Decoderreihenfolge) werden, wie für "Skipped"-Makroblöcke spezifiziert, gesetzt (vgl. DRAFT ISO/IEC 14496-10:2002 (E), Dokument JVT-E146d37: "Editor's Proposed Draft Text Modifications for Joint Video Specification (ITU-T Rec. H264 |ISO/IEC 14496-10 AVC), Geneva modifications draft 36", Geneva, Switzerland, October 2002.) Nachdem alle Makroblöcke eines Bildes decodiert wurden, erfolgt der Aufruf des Textur-Synthesizers zum Auffüllen der zu synthetisierenden Texturbereiche.

Das durchgeführte Experiment bestand darin, einen Textur-Analyzer und einen Textur-Synthesizer in einen H.264/AVC video codec (Joint Model 2.1) zu integrieren und anschließend Videosequenzen zu codieren und wieder zu decodieren. Zwei bekannte Testsequenzen ("Flowergarden" und "Concrete") wurden hierzu verwendet. Beide Testsequenzen enthalten Texturen, die gut dazu geeignet sind zu demonstrieren, dass eine ungefähre Rekonstruktion bestimmter Texturen ohne merklichen visuellen Qualitätsverlust durchführbar ist.

In einer Ausführungsform der Erfindung wurde der H.264/AVC Codec wie folgt eingestellt:

- 3 B-Bilder,
- 1 Referenzbild,

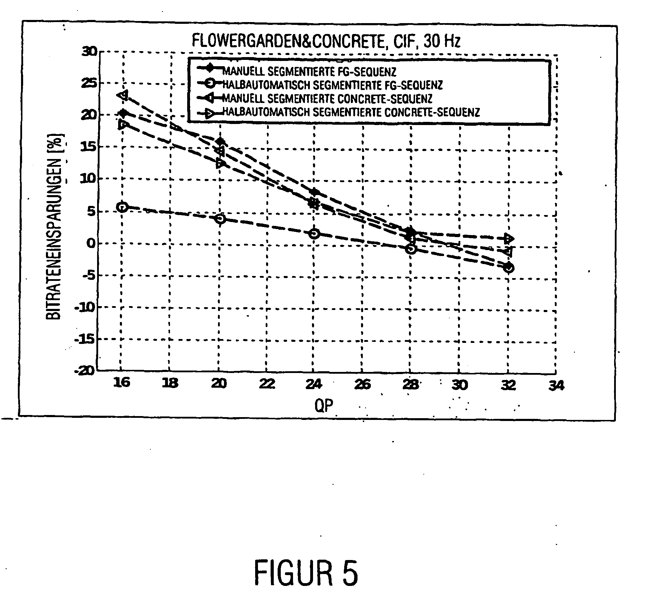

- CABAC (Entropiecodierverfahren),
- Rate Distortion Optimierung,
- kein Interlace,
- 30 Hz Frame Frequenz,
- Quantisierungsparameter QP = 16, 20, 24, 28 und 32 (Figur 5).

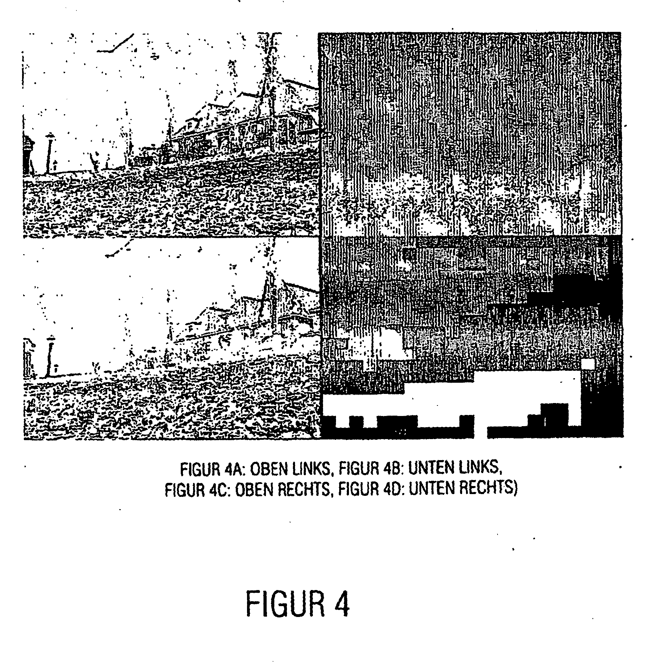

Die Ergebnisse waren für die "Flowergarden"-Sequenz von zufriedenstellender subjektiver Bildqualität. Figur 4 zeigt die erzielten Ergebnisse am Beispiel des 6. Bildes der "Flowergarden"-Sequenz. Figur 4c zeigt, dass das Differenzsignal im Bereich des Himmels fast Null ist, während es im Blumenbereich deutlich höher liegt. Beim optischen Vergleich zwischen decodiertem und Originalbild sind dennoch so gut wie keine Unterschiede erkennbar. Hier zeigt sich, dass der PSNR-Wert als Gütemaß für diese Art der Codierung ungeeignet ist.

Um die größtmögliche Datenrateneinsparung abschätzen zu können, wurden die beiden Testsequenzen für die ersten Tests manuell segmentiert. Es folgten weitere Tests mit halbautomatisch generierten Segmentierungsmasken (vgl. oben den Abschnitt "Encoderseitige Texturanalyse").

Figur 5 zeigt die für beide Testsequenzen erzielten Bitrateneinsparungen in Abhängigkeit des Quantisierungsparameters (QP). Die größten Einsparungen wurden für die höchste Quantisierungsauflösung (QP=16) gemessen. Einsparungen von 20,29% (Flowergarden) und 23,05% (Concrete) konnten mit handsegmentierten Masken für diese Auflösung gemessen werden. Mit halbautomatisch generierten Masken erhielten wir Einsparungen von 5.6% (Flowergarden) und 18.53% (Concrete) für QP=16. Die Bitrateneinsparung wird mit abnehmender Quantisierungsauflösung bzw. mit steigendem QP-Wert kleiner. Dies ist darauf zurückzuführen, daß die übertragene Seiteninformation unabhängig vom QP konstant bleibt. D. h. der Anteil der Seiteninformation an der Gesamtdatenrate wird mit gröber werdender Quantisierungsauflösung immer größer. Bei Quantisierungsparametern größer als 28 bzw. 32 (Figur 5) sind die Datenraten des Standard H264/AVC Video Codecs etwa gleich oder sogar kleiner als die des Codecs mit Texturanalyse und -synthese.

Die Überschneidung der "Concrete"-Kurven (Figur 5) beruht auf der Tatsache, dass die Anzahl der detektierten Texturen bei der halbautomatischen Segmentierung, über die gesamte Sequenz gesehen, kleiner war als bei der manuellen Segmentierung, so dass die Seiteninformation, die übertragen werden musste, bei der halbautomatischen Segmentierung geringer war als bei der manuellen. Daher war das Volumen der Seiteninformation im halbautomatischen Fall geringer als im manuellen. Die subjektive Bildqualität der H264/AVC videocodierten und - decodierten Bildsequenzen war für alle QP-Einstellungen vergleichbar mit den Ergebnissen der Codierung mit Texturanalyse und -synthese (vgl. http://bs.hhi.de/~ndjiki/SE.htm).

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch machen.

**Bezugszeichenliste**

1    Encoder
2    Decoder
3    Textur-Analyzer (TA)
4    Textur-Sythesizer (TS)

**Patentansprüche**

1.  Verfahren zur Videoencodierung, mit folgenden Schritten:

Durchführen, für jedes Bild einer Gruppe von Bildern einer Videosequenz, einer Texturanalyse , um jedes Bild in Blöcke aufzuteilen;
Zusammenfassen von Blöcken mit ähnlichen Farb- und Textureigenschaften innerhalb der Bilder, um Bereiche synthetisierbarer Textur zu ermitteln; und
unter Verwendung von Informationen über ermittelte Bereiche synthetisierbarer Textur und von Informationen über die Textur dieser Bereiche, Kodieren der Videoszenen und Erzeugen von Meta-Daten zur Beschreibung der ermittelten Bereiche und zur Beschreibung der synthetisierbaren Textur,
wobei das Erzeugen der Meta-Daten das Schätzen von Bewegungsparametern aufweist, die eine Verzerrung beschreiben, um synthetisierbare Bereiche in Bildern aus der Gruppe von Bildern durch die Verzerrung an entsprechende Texturbereiche in dem ersten oder dem letzten Bild dieser Gruppe anzupassen, wobei die Bewegungsparameter Teil der Meta-Daten sind.

**2.** Verfahren nach Anspruch 1, bei dem die Durchführung der Texturanalyse das Aufteilen von Bildern unter Verwendung eines Multiresolutionquadtrees in Blöcke aufweist.

**3.** Verfahren nach Anspruch 2, bei dem die Aufteilung eines Blockes abgebrochen wird, wenn

- die durch den nächsten Aufteilungsschritt entstehenden Blöcke ähnliche Farb- und/oder Textureigenschaften wie dieser Block aufweisen oder
- die Grösse von Blöcken des nächsten Aufteilungsschrittes einen vorgegebenen Wert unterschreitet.

**4.** Verfahren nach Anspruch 3, bei dem Blöcke, deren Aufteilung aufgrund ähnlicher Farb- und/oder Textureigenschaften abgebrochen wurde, als homogene Blöcke und die nach erfolgter Aufteilung des Bildes von den homogenen Blöcken verschiedenen Blöcke als unklassifizierbare Blöcke **gekennzeichnet** werden.

**5.** Verfahren nach Anspruch 3 oder 4, bei dem nach der Aufteilung eines Bildes für diejenigen Blöcke, deren Aufteilung aufgrund ähnlicher Farb- und/oder Textureigenschaften abgebrochen wurde, eine Ähnlichkeitsbewertung erfolgt und ähnliche Blöcke zu synthetisierbaren Bereichen zusammengefasst werden.

**6.** Verfahren nach Anspruch 5, bei dem die Ähnlichkeit von Blöcken auf Basis von MPEG-7-Deskriptoren bewertet wird.

**7.** Verfahren nach Anspruch 6, bei dem die Ähnlichkeit von Blöcken auf Basis der MPEG-7-Deskriptoren "Edge Histogram"-Textur-Deskriptor (EH) und/oder Scalable Color"-Deskriptor (SCC) bewertet wird.

**8.** Verfahren nach einem der voranstehenden-Ansprüche, bei dem die ermittelten Bereiche synthetisierbarer Textur eines Bildes einer Videosequenz mit Bereichen synthetisierbarer Textur vorangegangener Bilder der Videosequenz abgeglichen werden.

**9.** Verfahren nach einem der voranstehenden Ansprüche, bei dem das erste und letzte Bild (die sog. Keyframes) einer Gruppe von Bildern auf Basis eines Mean Squared Error-Verfahrens (MSE-basiert) codiert und dazwischenliegende B-Bilder mit ermittelten synthetisierbaren Bereichen partiell synthetisiert werden.

**10.** Verfahren nach Anspruch 9, bei dem die zeitliche Konsistenz der Erkennung synthetisierbarer Texturen einer Gruppe von Bildern mittels eines Texturkatalogs sichergestellt wird.

**11.** Verfahren nach einem der vorhergehenden Ansprüche, bei dem die Verzerrung mit Hilfe eines durch folgende Gleichungen beschriebenen planaren perspektivischen Bewegungsmodells durchgeführt wird:

$$x' = [(a_1 + a_3x + a_4y)/(1 + a_7x + a_8Y9] + x,$$

$$y' = [(a_2 + a_5x + a_6y)/(1 + a_7x + a_8y)] + y,$$

wobei

(x,y) die Koordinaten des Ausgangspunktes,
(x',y') die transformierten Koordinaten des Ausgangspunktes und
$a_1, ..., a_8$ Modellparameter

darstellen.

**12.** Verfahren nach Anspruch 11, bei dem durch die Verzerrung die Textur des ersten oder letzten Bildes der aktuellen Gruppe von Bildern in Richtung des ermittelten synthetisierbaren Texturbereiches verzerrt wird, wobei jedem solchen Texturbereich ein Bewegungsparametersatz und ein Kontrollparameter zugeordnet wird, wobei der Kontrollpara-

# EP 1 635 578 B1

meter angibt, ob das erste oder das letzte Bild einer Gruppe von Bildern für die Textursynthese verwendet wird.

13. Verfahren nach Anspruch 12, bei dem für die Textursynthese das Bild einer Gruppe von Bildern verwendet wird, für welches ein kleineres Differenzsignal zwischen der synthetisierten und der Originaltexturregion ermittelt wird.

14. Verfahren nach einem der voranstehenden Ansprüche, bei dem als Meta-Daten von Bereichen mit synthetisierbarer Textur pro Texturbereich

   - eine Segmentierungsmaske,
   - ein Bewegungsparametersatz und/oder
   - ein Kontrollparameter

erzeugt werden.

15. Verfahren zur Videodecodierung, mit folgenden Schritten:

   Auswerten von kodierten Daten von Videoszenen und Meta-Daten zur Beschreibung ermittelter Bereiche synthetisierbarer Textur in den Videoszenen und zur Beschreibung der synthetisierbaren Textur dieser Bereiche; und
   Rekonstruieren der Videoszenen durch synthetische Generierung von synthetisch generierten Texturen für die ermittelten Bereiche,
   **dadurch** charakterisiert, dass
   die Meta-Daten Bewegungsparameter aufweisen, die eine Verzerrung beschreiben, um synthetisierbare Bereiche in Bildern einer Gruppe von Bildern durch die Verzerrung an entsprechende Texturbereiche in dem ersten oder dem letzten Bild dieser Gruppe anzupassen, und dass
   das Rekonstruieren das Verzerren der entsprechenden Texturbereiche in dem ersten oder letzten Bild der Gruppe in Richtung der angepaßten synthetisierbare Bereiche in den Bildern der Gruppe von Bildern unter Verwendung der Bewegungsparameter aufweist.

16. Anordnung zur Videoencodierung, mit
   einer Einrichtung zum Durchführen, für jedes Bild einer Gruppe von Bildern einer Videosequenz, einer Texturanalyse, um jedes Bild in Blöcke aufzuteilen, und Zusammenfassen von Blöcken mit ähnlichen Farb- und Textureigenschaften innerhalb der Bilder, um Bereiche synthetisierbarer Textur zu ermitteln,
   einer Einrichtung zum, unter Verwendung von Informationen über ermittelte Bereiche synthetisierbarer Textur und von Informationen über die Textur dieser Bereiche, Kodieren der Videoszenen und Erzeugen von Meta-Daten zur Beschreibung der ermittelte Bereiche und zur Beschreibung der synthetisierbaren Textur,
   wobei die Einrichtung zum Erzeugender Meta-Daten ausgebildet ist, Bewegungsparameter zu schätzen, die eine Verzerrung beschreiben, um synthetisierbare Bereiche in Bildern aus der Gruppe von Bildern durch die Verzerrung an entsprechende Texturbereiche in dem ersten oder dem letzten Bild dieser Gruppe anzupassen, wobei die Bewegungsparameter Teil der Meta-Daten sind.

17. Anordnung zur Videodecodierung, mit folgenden Schritten:

   einer Einrichtung zum Auswerten von kodierten Daten von Videoszenen und Meta-Daten zur Beschreibung ermittelter Bereiche synthetisierbarer Textur in den Videoszenen und zur Beschreibung der synthetisierbaren Textur dieser Bereiche; und
   einer Einrichtung zum Rekonstruieren der Videoszenen durch synthetische Generierung von synthetisch generierten Texturen für die ermittelten Bereiche,
   **dadurch gekennzeichnet, dass**
   die Meta-Daten Bewegungsparameter aufweisen, die eine Verzerrung beschreiben, um synthetisierbare Bereiche in Bildern einer Gruppe von Bildern durch die Verzerrung an entsprechende Texturbereiche in dem ersten oder dem letzten Bild dieser Gruppe anzupassen, und dass
   die Einrichtung zum Rekonstruieren ausgebildet ist, die entsprechenden Texturbereiche in dem ersten oder letzten Bild der Gruppe in Richtung der angepaßten synthetisierbare Bereiche in den Bildern der Gruppe von Bildern unter Verwendung der Bewegungsparameter zu verzerren.

18. Computerprogramm, das es einem Computer ermöglicht, nachdem es in den Speicher des Computers geladen worden ist, ein Verfahren gemäß einem der Ansprüche 1 bis 15 auszuführen.

9

**19.** Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 15 auszuführen.

**Claims**

**1.** Method for video encoding, comprising:

performing, for each frame of a group of frames of a video sequence, a texture analysis to subdivide each frame into blocks;
combining blocks of similar color and texture properties within the frames to identify areas of synthesizable textures; and
coding the video scenes and generating meta data for describing the areas identified and for describing the synthesizable textures using information on identified areas of synthesizable textures, and information on the textures of these areas;
wherein generating the meta data comprises estimating motion parameters which describe a distortion to adjust, by the distortion, synthesizable areas in frames from the group of frames to corresponding texture areas in the first or last frame of this group, the motion parameters being part of the meta data.

**2.** Method as claimed in claim 1, wherein performing the texture analysis comprises subdividing frames into blocks using a multi-resolution quadtree.

**3.** Method as claimed in claim 2, wherein the subdividing of a block is broken off if

- the blocks resulting from the next subdivision step exhibit similar color and/or texture properties as this block, or
- the sizes of blocks of the next subdivision step fall short of a predefined value.

**4.** Method as claimed in claim 3, wherein blocks, the subdividing of which has been broken off because of similar color and/or texture properties, are marked as homogeneous blocks, and the blocks which differ from the homogeneous blocks once the subdividing of the frame has been completed are marked as non-classifiable blocks.

**5.** Method as claimed in claim 3 or 4, wherein after the subdivision of a frame, a similarity assessment is performed for those blocks whose subdivision was broken off because of similar color and/or texture properties, and wherein similar blocks are combined into synthesizable areas.

**6.** Method as claimed in claim 5, wherein the similarity of blocks is assessed on the basis of MPEG-7 descriptors.

**7.** Method as claimed in claim 6, wherein the similarity of blocks is assessed on the basis of the MPEG-7 descriptors "Edge Histogram" texture descriptor (EH) and/or "Scalable Color" descriptor (SCC).

**8.** Method as claimed in any of the previous claims, wherein the identified areas of synthesizable textures of a frame of a video sequence are matched with areas of synthesizable textures of preceding frames of the video sequence.

**9.** Method as claimed in any of the previous claims, wherein the first and last frames (the so-called key frames) of a group of frames are encoded on the basis of a mean squared error method (MSE based), and intervening B frames comprising identified synthesizable areas are partially synthesized.

**10.** Method as claimed in claim 9, wherein the temporal consistency of the detection of synthesizable textures of a group of frames is ensured by means of a texture catalogue.

**11.** Method as claimed in any of the previous claims, wherein the distortion is performed by means of a planar perspective motion model described by the following equations:

$$x' = [(a_1 + a_3 x + a_4 y)/(1 + a_7 x + a_8 y)] + x,$$

$$y' = [(a_2 + a_5x + a_6y)/(1 + a_7x + a_8y)] + y,$$

wherein

(x, y) represent the coordinates of the starting point,
(x', y') represent the transformed coordinates of the starting point, and
$a_1, ..., a_8$ represent model parameters.

12. Method as claimed in claim 11, wherein the distortion causes the texture of the first or last frames of the current group of frames to be warped in the direction of the synthesizable texture area identified, each such texture area being associated a motion parameter set and a control parameter, the control parameter indicating whether the first or last frame of a group of frames is used for texture synthesis.

13. Method as claimed in claim 12, wherein for texture synthesis, that frame of a group of frames is used for which a smaller differential signal is determined between the synthesized and the original texture regions.

14. Method as claimed in any of the previous claims, wherein the following are generated per texture area as meta data of areas with synthesizable textures:

- a segmentation mask,
- a motion parameter set, and/or
- a control parameter.

15. Method for video encoding, comprising:

assessing encoded data of video scenes and meta data for describing identified areas of synthesizable textures in the video scenes and for describing the synthesizable textures of these areas; and
reconstructing the video scenes by synthetically generating synthetically generated textures for the areas identified,
**characterized in that**
the meta data comprises motion parameters which describe a distortion to adjust, by the distortion, synthesizable areas in frames of a group of frames to corresponding texture areas in the first or last frame of this group, and that reconstructing comprises distorting the corresponding texture areas in the first or last frame of the group in the direction of the adjusted synthesizable areas in the frames of the group of frames while using the motion parameters.

16. Arrangement for video encoding, comprising
means for performing, for each frame of a group of frames of a video sequence, a texture analysis to subdivide each frame into blocks and combine blocks of similar color and texture properties within the frames to identify areas of synthesizable texture,
means for coding the video scenes and generating meta data for describing the areas identified and for describing the synthesizable texture using information on identified areas of synthesizable textures, and information on the textures of these areas,
wherein the means for generating the meta data is configured to estimate motion parameters which describe a distortion to adjust, by the distortion, synthesizable areas in frames from the group of frames to corresponding texture areas in the first or last frame of this group, the motion parameters being part of the meta data.

17. Arrangement for video encoding, comprising:

means for assessing encoded data of video scenes and meta data for describing identified areas of synthesizable textures in the video scenes and for describing the synthesizable textures of these areas; and
means for reconstructing the video scenes by synthetically generating synthetically generated textures for the areas identified,
**characterized in that**
the meta data comprises motion parameters which describe a distortion to adjust, by the distortion, synthesizable areas in frames of a group of frames to corresponding texture areas in the first or last frame of this group, and that

the means for reconstructing comprises distorting the corresponding texture areas in the first or last frame of the group in the direction of the adjusted synthesizable areas in the frames of the group of frames while using the motion parameters.

18. Computer program enabling a computer, once it has been loaded into the computer's memory, to perform a method as claimed in any of claims 1 to 15.

19. Computer-readable storage medium having a program stored thereon which enables the computer, once it has been loaded into the computer's memory, to perform a method as claimed in any of claims 1 to 15.

**Revendications**

1. Procédé de vidéocodage, aux étapes suivantes consistant à:

   effectuer, pour chaque image d'un groupe d'images d'une séquence vidéo, une analyse de texture, pour diviser chaque image en blocs;
   regrouper des blocs à propriétés de couleur et de texture similaires dans les images, pour déterminer des zones de texture synthétisable; et
   à l'aide d'informations sur des zones de texture synthétisable déterminées et d'informations sur la texture de ces zones, coder les scènes vidéo et générer des méta-données pour décrire les zones déterminées et décrire la texture synthétisable;
   la génération des méta-données présentant l'estimation de paramètres de mouvement décrivant une distorsion, pour adapter des zones synthétisables dans des images du groupe d'images par distorsion à des zones de texture correspondantes dans la première ou la dernière image de ce groupe, les paramètres de mouvement faisant partie des méta-données.

2. Procédé selon la revendication 1, dans lequel la réalisation de l'analyse de texture présente la division d'images en blocs à l'aide d'un arbre quaternaire (quad-tree) multirésolution.

3. Procédé selon la revendication 2, dans lequel la division d'un bloc est interrompue lorsque

   - les blocs résultant de l'étape de division suivante présentent des propriétés de couleur et/ou de texture similaires à celles de ce bloc, ou
   - la grandeur de blocs de l'étape de division suivante est inférieure à une valeur prédéterminée.

4. Procédé selon la revendication 3, dans lequel les blocs dont la division a été interrompue par suite de propriétés de couleur et/ou de texture similaires sont **caractérisés** comme étant des blocs homogènes et les blocs qui, après réalisation de la division de l'image, sont différents des blocs homogènes sont **caractérisés** comme étant des blocs non classifiables.

5. Procédé selon la revendication 3 ou 4, dans lequel a lieu après la division d'une image, pour les blocs dont la division a été interrompue par suite de propriétés de couleur et/ou de texture similaires, une évaluation de similitude et des blocs similaires sont regroupés en zones synthétisables.

6. Procédé selon la revendication 5, dans lequel la similitude de blocs est évaluée sur base de descripteurs MPEG-7.

7. Procédé selon la revendication 6, dans lequel la similitude de blocs est évaluée sur base des descripteurs MPEG-7 descripteur de texture "Edge Histogram" (EH) et/ou descripteur "Scalable Color" (SCC).

8. Procédé selon l'une des revendications précédentes, dans lequel les zones de texture synthétisable déterminées d'une image d'une séquence vidéo sont égalisées avec des zones de texture synthétisable d'images précédentes de la séquence vidéo.

9. Procédé selon l'une des revendications précédentes, dans lequel la première et la dernière image (les soi-disant 'key frames') d'un groupe d'images sont codées sur base d'un procédé à erreur carrée moyenne (sur base d'ECM) et les images B situées entre ces dernières sont partiellement synthétisées par des zones synthétisables déterminées.

**10.** Procédé selon la revendication 9, dans lequel la consistance dans le temps de l'identification de textures synthétisables dans un groupe d'images est assurée au moyen d'un catalogue de textures.

**11.** Procédé selon l'une des revendications précédentes, dans lequel la distorsion est réalisée au moyen d'un modèle de mouvement en perspective plan décrit par les équations suivantes:

$$x' = [(a_1 + a_3x + a_4y)/(1 + a_7x + a_8y9)] + x,$$

$$y' = [(a_2 + a_5x + a_6y)/(1 + a_7x + a_8y)] + y,$$

où

(x, y) représentent les coordonnées du point de départ,
(x', y') représentent les coordonnées transformées du point de départ, et
$a_1, ... , a_8$ représentent les paramètres de modèle.

**12.** Procédé selon la revendication 11, dans lequel la texture de la première ou de la dernière image du groupe d'images actuel est, par la distorsion, distorsionnée en direction de la zone de texture synthétisable déterminée, à chaque telle zone de texture étant associés un ensemble de paramètres de mouvement et un paramètre de contrôle, le paramètre de contrôle indiquant si la première ou la dernière image d'un groupe d'images est utilisée pour la synthèse de texture.

**13.** Procédé selon la revendication 12, dans lequel est utilisée pour la synthèse de texture l'image d'un groupe d'images pour laquelle est déterminé un plus petit signal de différence entre la région à texture synthétisée et la région à texture originale.

**14.** Procédé selon l'une des revendications précédentes, dans lequel sont générés comme méta-données de zones à texture synthétisable, par zone de texture

- un masque de segmentation,
- un ensemble de paramètres de mouvement et/ou
- un paramètre de contrôle.

**15.** Procédé de vidéocodage, aux étapes suivantes consistant à:

évaluer des données codées de scènes vidéo et des méta-données, pour décrire des zones déterminées de texture synthétisable dans les scènes vidéo et pour décrire la texture synthétisable de ces zones; et
reconstruire les scènes vidéo en générant synthétiquement des textures générées synthétiquement pour les zones déterminées,
**caractérisé par le fait que**
les méta-données présentent des paramètres de mouvement décrivant une distorsion, pour adapter des zones synthétisables dans des images d'un groupe d'images par distorsion à des zones de texture correspondantes dans la première ou la dernière image de ce groupe, et que
la reconstruction présente la distorsion des zones de texture correspondantes dans la première ou la dernière image du groupe dans le sens des zones synthétisables adaptées dans les images du groupe d'images à l'aide des paramètres de mouvement.

**16.** Dispositif de vidéocodage, avec:

un moyen destiné à effectuer, pour chaque image d'un groupe d'images d'une séquence vidéo, une analyse de texture, pour diviser chaque image en blocs, et à regrouper des blocs à propriétés de couleur et de texture similaires dans les images, pour déterminer des zones de texture synthétisable;
un moyen destiné à coder, à l'aide d'informations sur des zones de texture synthétisable déterminées et d'informations sur la texture de ces zones, les scènes vidéo et à générer des méta-données pour décrire les zones déterminées et décrire la texture synthétisable,

le moyen destiné à générer des méta-données étant réalisé de manière à estimer des paramètres de mouvement décrivant une distorsion, pour adapter des zones synthétisables dans des images du groupe d'images par distorsion à des zones de texture correspondantes dans la première ou la dernière image de ce groupe, les paramètres de mouvement faisant partie des méta-données.

17.  Dispositif de vidéocodage, aux étapes suivantes:

un moyen destiné à évaluer des données codées de scènes vidéo et des méta-données pour décrire des zones déterminées de texture synthétisable dans les scènes vidéo et pour décrire la texture synthétisable de ces zones; et

un moyen destiné à reconstruire les scènes vidéo en générant synthétiquement des textures générées synthétiquement pour les zones déterminées,

**caractérisé par le fait que**

les méta-données présentent des paramètres de mouvement décrivant une distorsion, pour adapter des zones synthétisables dans des images d'un groupe d'images par distorsion à des zones de texture correspondantes dans la première ou la dernière image de ce groupe, et que

le moyen destiné à reconstruire est réalisé de manière à distorsionner les zones de texture correspondantes dans la première ou la dernière image du groupe dans le sens des zones synthétisables adaptées dans les images du groupe d'images à l'aide des paramètres de mouvement.

18.  Programme d'ordinateur permettant à un ordinateur, après qu'il a été chargé dans la mémoire de l'ordinateur, de réaliser un procédé selon l'une des revendications 1 à 15.

19.  Support de mémoire lisible en ordinateur sur lequel est mémorisé un programme permettant à un ordinateur, après qu'il a été mémorisé dans la mémoire de l'ordinateur, de réaliser un procédé selon l'une des revendications 1 à 15.

FIGUR 1

FIGUR 2

I FRAME                    AKTUELLER FRAME

FIGUR 3

FIGUR 4A: OBEN LINKS, FIGUR 4B: UNTEN LINKS,
FIGUR 4C: OBEN RECHTS, FIGUR 4D: UNTEN RECHTS)

FIGUR 4

FIGUR 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **YOON S Y et al.** Subband texture synthesis for image coding. *Proceedings of the SPIE,* Januar 1998, vol. 3299, 489-497
- **SMOLIC et al.** Long-term global motion estimation and its application for sprite coding, content description, and segmentation. *IEEE Transactions on Circuits and Systems for Video Technology,* Dezember 1999, vol. 9 (8

- **J. MALKI et al.** Region Queries without Segmentation for Image Retrieval by Content. *VISUAL,* 1999, vol. 99, 115-122